**Europäisches Patentamt**

**European Patent Office**

**Office européen des brevets**

(19)

(11) **EP 1 266 691 A1**

(12) **EUROPEAN PATENT APPLICATION**

(43) Date of publication:
**18.12.2002 Bulletin 2002/51**

(21) Application number: **01870130.0**

(22) Date of filing: **13.06.2001**

(51) Int Cl.⁷: **B01L 3/00**, B01L 7/00,
B01L 9/06, G01N 21/03

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **AIC**
**2650 Edegem (BE)**

(72) Inventors:
• **Zakhartsev, Maxim**
**2610 Wilrijk (BE)**
• **Blust, Ronny**
**2000 Antwerpen (BE)**

(74) Representative:
**Brants, Johan Philippe Emile et al**
**De Clercq, Brants & Partner cv**
**Edgard Gevaertdreef 10a**
**9830 Sint-Martens-Latem (BE)**

(54) **Temperature-controlled device and method suitable for spectroscopic analysis**

(57) The present invention relates to a device suitable for at least temporarily housing a plurality of liquid, solid and/or semi-solid substrates, comprising:

- an upper plate (8) consisting of a plurality of downwardly directed wells (4),
- a bottom plate (5), and
- an at least partly hollow chamber, positioned between the upper and the bottom plates,

whereby said chamber is able to contain a heat-carrying element for controlling the temperature of the substrates.

The invention further relates to a method for performing simultaneously a plurality of spectroscopic analysis, wherein as from the dispersing of a plurality of substrates on a support, the reaction and the analysis are performed at equal temperatures.

FIG . 1

EP 1 266 691 A1

## Description

**Field of the invention**

The present invention relates to a device suitable for housing a plurality of substrates under controlled-temperature conditions. More in particular the device relates to a support suitable for spectroscopic analysis.

**Background of the invention**

The invention relates to a device suitable for at least temporarily housing a plurality of liquid, solid and/or semi-solid substrates comprising an upper plate consisting of a plurality of downward directed wells.

These devices are known as a micro-titer plate for performing simultaneous a plurality of reactions on one support. The problem using these micro-titer plates especially in spectrophotometer analysis is that they are not adapted for spectroscopic readers or they do not provide for a continuous temperature-controlled environment of their content. In general they are incubated in a separated incubation unit. Such a device is described in EP 0339710 disclosing a device for thermostatic micro-titer plates. Although said device is useful for a control of the temperatures of the substrates, it cannot be used for regulating the temperature of a micro-titer plate during spectroscopic analysis.

Traditional spectrophotometer analysis with a temperature-controlled water jacket around a single cuvette holder are also known. However, they are limited in the number of samples handled for simultaneous reading (mostly from 1 to 6) and contain in general a large volume which is often not necessary.

Constant and accurate control of temperature and time is very important for spectroscopic analysis especially in microbiology, enzymology and immunology of ectothermic (cold-blooded) animals, in several fields, such as kinetic studies, thermodynamic studies and the study of phenomenon which are time-dependent as well as temperature-dependent. The wording constant or continuously in the present application includes the time span as from dispensing the substrates in the support plate in the different wells up to the end of the spectrophotometric analysis.

Nowadays enzymatic analysis using micro-titer plate techniques, are forced to study the properties of enzymes of ectothermic animals at standard temperatures (usually between 25°C and 37°C) and then extrapolate the results obtained down to environmental temperature (Pierce, V. A., Crawford, D. L., 1994. Biochemical Genetics 32, 315-330). Often such extrapolation results in inadequate conclusions, because standard temperatures are ecologically irrelevant. All enzyme kinetic properties are temperature-dependent, therefore the measure of enzyme activities at environmentally relevant temperatures will give more reliable information about the functioning of enzymes from ectothermic animals. Furthermore, correct thermodynamic measurement for single specimen, for example the measure of the apparent Arrhenius activation energy ($E_a$), requires the reading of hundreds of enzymatic reactions (due to statistical requirement) at different temperatures.

There is therefore a lack of device capable of supporting a multi-samples format as well as giving constant and accurate temperature control in broad range of temperatures (0° - 60°C), especially below room temperature (particularly between 0° and +25°C) and being adaptable for spectrophotometric applications.

A main object of this invention is therefore to provide a device useful for working under accurate and constant temperature control. It is another object of the invention to provide a device capable of housing a plurality of substrates wherein the substrates can be brought to a reaction temperature with a small delay. Another object of the invention is to provide a device capable of housing a multitude of samples useful for the continuous and speedy analysis of a plurality of samples under controlled temperature conditions. Still another object of the invention is to provide a device for the analysis of reaction performed at a broad range of temperatures especially at low temperatures. A yet further object of the invention is to provide a device having optical qualities to allow for simultaneous spectroscopic measurements of the substrate in the wells under controlled-temperature conditions.

**Summary of the invention**

The present invention relates to a device suitable for at least temporarily housing a plurality of liquid, solid and/or semi-solid substrates, comprising an upper plate consisting of a plurality of downwardly directed wells, a bottom plate, and an at least partly hollow chamber, positioned between the upper and the bottom plates, whereby said chamber is able to contain a heat-carrying element for controlling the temperature of the substrates. Experiments have proven the effectiveness of said device.

In a preferred embodiment the upper plate of said device is a micro-titer plate preferably made from a rigid and a light transparent material suitable for spectroscopic analysis.

The present invention will be further disclosed in detail hereunder wherein a preferred embodiment of the device of the present invention is disclosed in details.

In the following detailed description, reference is made to the accompanying figures which form a part hereof, and in which is shown by way of illustration specific embodiments in which the invention may be practised.

## Brief description of the figures:

Figure 1 represents a perspective view of a preferred embodiment of a device according to the invention.

Figure 2 represents a cross-sectional view along the line I-I of the device of figure 1.

Figure 3 represents a schematically perspective view of a device of the present invention in an operational environment, wherein the device is shown with an apparatus for spectroscopic measurement and is connected to a thermostatic apparatus.

Figure 4 represents a fragmentary cross-sectional view of said device of figure 3.

Figure 5 shows a graph representing the wavelength scan of the solution of ethylene glycol/water (1: 1, v/v).

Figure 6 shows a graph representing a linearity test between the temperature of the thermostatic bath and the temperature of the substrates present in a device.

Figure 7 represents a schematic top view of a device and the different temperatures measured across said device.

Figure 8 shows a graph representing the dependence of the initial velocity of enzymatic reaction upon substrate concentration for an enzyme studied.

Figure 9 shows a graph representing the dependence of the initial velocity of enzymatic reaction upon substrate concentration at different temperatures for an enzyme studied.

Figure 10 shows a graph representing an Arrhenius plot for an enzyme studied.

## Detailed description

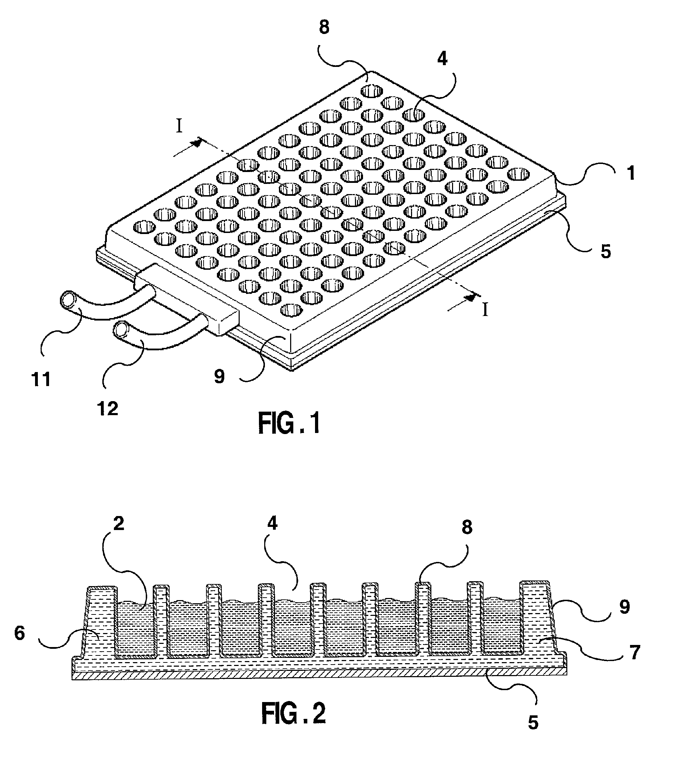

Figure 1 shows an embodiment of a device according to the invention. In this embodiment the device 1 comprises an upper plate 3 consisting of a plurality of downwardly directed wells 4, a bottom plate 5, and side walls 9 interconnecting said upper plate 3 with said bottom plate 5. The device 1 according to the invention is suitable for at least temporarily housing a plurality of liquid, solid and/or semi-solid substrates 2. As shown figure 2 an at least partly hollow chamber 6 is positioned between the upper 3 and the bottom plates 5, whereby said chamber 6 is able to contain a heat-carrying element 7 for controlling the temperature of the substrates 2.

Although the illustrated embodiments show arrangements wherein the upper plate 3 is configured in accordance with the 96-well (12x8) micro-titer plate 8, the invention also contemplates the uses of any other available micro-titer plates as the upper plate having for example 12, 24, 48, 384, 1536, wells or more. Therefore, references 3 and 8 are interchangeable for the purpose of the scope of the invention.

The upper 3 and bottom plates 5 of the device 1 may be made of any rigid and light transparent material, water-insoluble, fluid-impervious material that is substantially chemically non-reactive with the substrates 2 housed in the wells 4. Suitable materials include acrylics, polystyrene, polycarbonates, polypropylenes and polysulfones.

More preferably the upper 3, the bottom plates 5 and the heat-carrying element 7 are of material suitable for spectroscopic applications. They are preferably made of light transparent or otherwise optically transmissive plastic to facilitate optical reading of the wells in analytical investigation of the substrates in the wells. More preferably the bottom of each well and the bottom plate have an optical quality surface for transmitting light through the underside and the substrates in the wells.

The device is therefore useful for high-throughput spectroscopic analysis of the substrates housed in the wells at temperatures other than room temperature.

The upper 3 and the bottom plate 5 define an at least partly hollow chamber 6 as for example shown in figure 2, which is able to contain a heat-carrying element 7 for controlling the temperature of the substrates 2 housed in the wells 4. The heat-carrying element 7 according to the invention can be any of the well-known means in the art such as a heating resistance. In a preferred embodiment the heat-carrying element 7 is a heat-carrying fluid 10. The heat-carrying fluid 10 may be liquid or gas. In a more preferred embodiment the heat-carrying fluid 10 is a liquid, such as water, ethylene glycol, glycerol, silicone oil, alcohol and/or mixtures thereof, in which case the chamber 6 of the device 1 is liquid tight.

The chamber 6 is further provided with an inlet 11 and an outlet 12 allowing circulation of the heat-carrying fluid 10, in and out of the chamber 6. The inlet 11 and the outlet 12 are those commercially available and are preferably made of non-oxidisable material. Connecting tubing 13 are further attached to said inlet 11 and outlet 12. These connecting tubing 13 are preferably of variable working length and are made of flexible material, for instance, silicon.

In a more preferred embodiment the device according to the invention further comprises temperature control means, comprising a heating unit, and pumping means for the transport of the heat-carrying-fluid 10 and a heat regulator for controlling the temperature of the heat-carrying fluid.

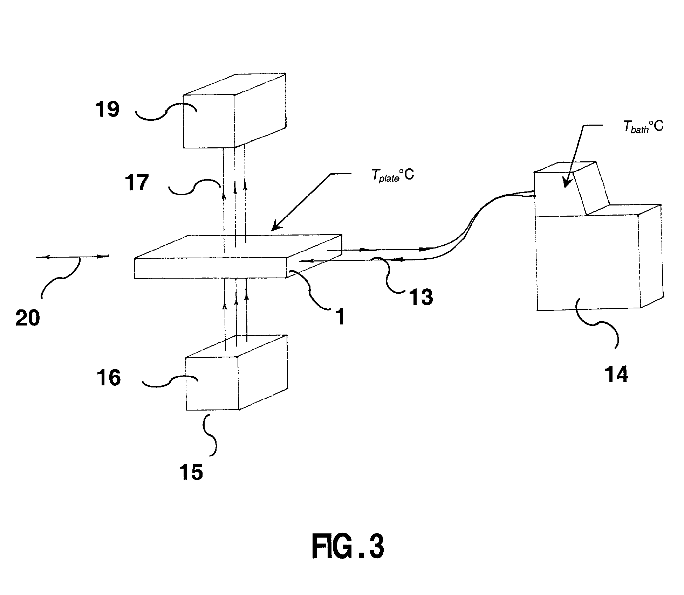

As shown in figure 3 the temperature control means is a thermostatic external bath 14. The heat-carrying fluid 10 circulates through the hollow chamber 6 of the device 1 and flows around the wells 4 and provides heat exchange. The device 1 is able to control temperature inside the wells in a broad range of temperature with an accuracy $\pm 0.1°C$. The accuracy of temperature control in the device 1 is completely limited by thermal accuracy of external thermostatic bath. Due to the flexible connecting tubing 13 free movement of the device 1 is possible for example for transport from one place (where the experiment is done) to another place (where the spectroscopic analysis is done), while providing with constant and accurate control of the temperature in time inside the wells.

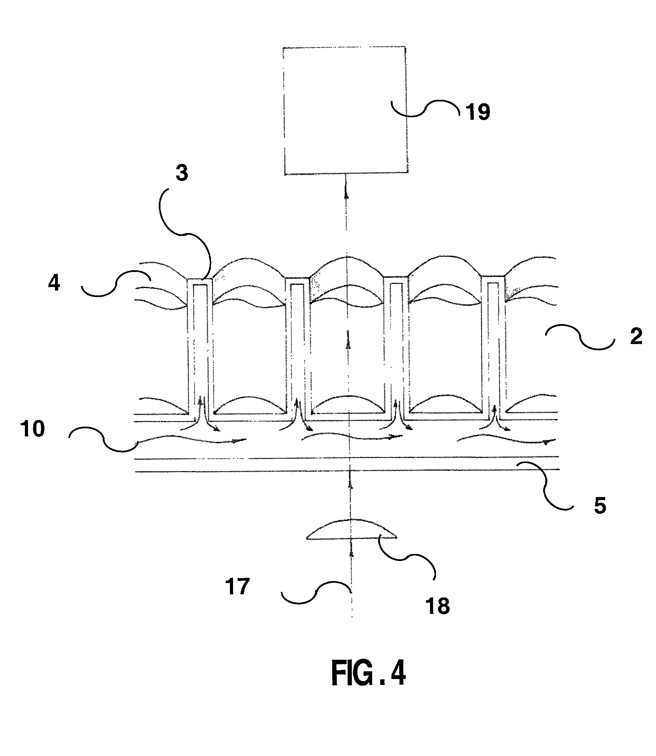

The device 1 can be mounted on existing instrumentation and equipment such as that commonly used in the chemical, pharmaceutical, biotech, and related industries for analysis of the substrates 2 presents in the wells 4. In a more preferred embodiment the device 1 is preferably used with a spectroscopic apparatus and more preferably a spectrophotometric plate reader 15. The flexible tubing 13 allows a freedom in the movement of said device and makes it also adaptable to use in analytical apparatus provided with stirring movements. The same feature allows the device 1 to move easily through the analytical apparatus due to the flexibility of the connecting tubing 13, and further allows precise and constant control of temperature of the substrates in the wells directly during data acquisition. Figure 3 illustrates the device 1 is a schematic spectrophotometric plate reader 15 wherein a light source 16 emits a light beam 17 which passes trough a lens 18 (figure 4) and the device 1 and is detected by a photodetector 19. For temperature control purposes the device 1 is connected to a thermostatic apparatus 14 by the connecting tubing 13 which allow free movement 20 of the device 1 through the plate reader 15.

In another embodiment (not shown), the device of the present invention further comprises an upper plate which is releasable mounted from the bottom plate. This allows the fast exchange and/or replacement of different upper plates, which could then be for single-use and disposable.

**Examples**

The following examples illustrate some features of the present invention, without, however, limiting the scope of the application.

A device 1 depicted in figure 1, 2, 3 and 4, was used throughout all the experiments. The upper plate 3 was a 96-well micro-titer plate 8 and the bottom plate 5 was made of glass. The control of the temperature in the device 1 was obtained using a thermostatic external bath 14. All the experiments were performed using a solution of ethylene glycol/water (1:1, v/v) as the heat-carrying fluid 10.

Example 1: Setting up of the working conditions for the device.

A solution of ethylene glycol/water was chosen as the heat-carrying fluid throughout the whole experiments. The solution has a specific heat of 0.82 at 25 °C and can be used as a heat-carrying fluid for applications using normal temperatures ranging from - 25 °C to 100 °C and more extremely for temperatures ranging from -35 °C to 115 °C. This solution is therefore useful for applications using broad range of temperatures.

During spectroscopic applications, the heat-carrying fluid will go through the plane of the light beam. It is therefore important to check whether the used fluid will not impinge on the parameters measured for the substrates under investigation. In addition to considering the fluid, ordinary glass is opaque to wavelengths below 300 nm, and that for UV spectroscopic application below 300 nm bottom plates in quartz could be used.

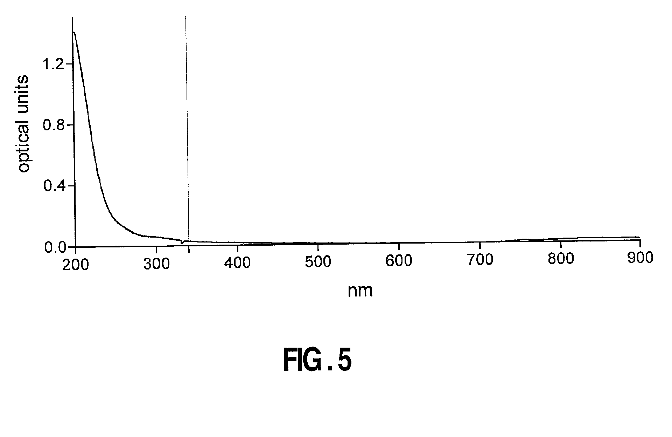

In order to define the working conditions of the device for spectroscopic applications, a wavelength scan of the solution of ethylene glycol/water was performed and the absorbance was measured. An UV-Visible spectrum was obtained as shown in Figure 5. The experiment was performed at room temperature (23 °C).

It can be seen from the UV-Vis spectra that spectroscopic applications above 340 nm are suitable with this specific heat-carrying fluid. Because of its physical properties i.e. the flexible range of working temperatures and its optical properties i.e. suitable for spectroscopic application above 340 nm, the solution of ethylene glycol/water is a suitable heat-carrying fluid for the device of the invention.

Furthermore, since the heat-carrying fluid in general has to go through the plane of the light beam, it is preferable that the external thermostatic bath is perfectly clean. The solution used as the heat-carrying fluid is preferably pure for spectroscopic analysis. The external thermostatic bath is preferably protected from dust penetration and micro-organism growth, as well as fluid evaporation.

Moreover, to avoid heat dispersion, all the pipes, excluding the flexible tubing connected to the inlet and the outlet, are insulated.

Example 2: Test of linearity of temperature control

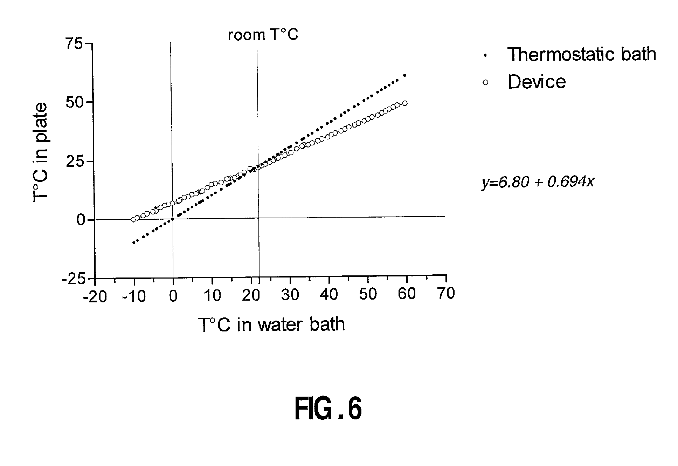

In order to check the relationship between the temperature of the device and the temperature of the thermostatic external bath, a test of linearity was performed. The room temperature was + 22.1°C during the experiment, and the linearity of the temperatures in the device was checked from 0 °C to 60 °C. The upper thermal limit of the device (+60°C) is set by thermal resistance of the polystyrene, from which the initial micro-titer plate is made. The data obtained were plotted on a graph as shown in figure 6.

From this plots an equation was computed which relates the temperature of the external thermostatic bath to the temperature of the device. It can be seen that in order to obtain the desired temperature in the device ($T_{plate}$), the temperature of the external thermostatic bath ($T_{bath}$) is adjusted according to the equation: $T_{bath} = \dfrac{T_{plate} - 6.80}{0.694}$. This equation is only valid for the given test-conditions. Furthermore, since the equation depends on the room temperature, it is preferable to fix the temperature inside the measuring chamber. The best way to set this parameter is to fix the ambient temperature inside the measuring chamber by means of a warm inert gas or air at a given temperature for example 25°C, blowing through the chamber. This allows to have a constant temperature gradient, and the parameters of the equation will remain constant. Moreover this will prevent water condensation onto the device's surfaces when working at low temperatures (<+6°C).

Example 3: Test of temperature homogeneity in the device.

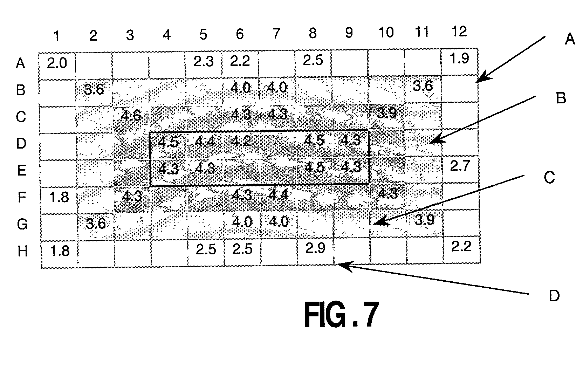

In order to check the homogeneity of the temperature over the whole device, the temperature was measured in a number of wells. During the experiment the temperature of the external thermostatic bath was set at - 3°C, and the room temperature was + 21.5°C. The results obtained are illustrated in figure 7 and Table 1 and 2.

Figure 7 shows a schematic view of the temperature measured in the wells of the device and also shows the results of temperature homogeneity test in the device. The horizontal numbers correspond to the number of columns and vertical letters correspond to the rows of the device. The total surface of the device was logically partitioned on several contours, denoted as A, B, C and D. Contour "A" covers all the wells of the device from well A1 to H12. Contour "B" consists of the wells which are enclosed between wells B2 and G11 (60 wells in total). Contour "C" consists of the wells which are enclosed between wells C3 and F10 (32 wells in total). Contour "D" consists of the wells which are enclosed between wells D4 and E9 (12 wells in total). Then the temperature inside a number of the wells was measured and one-way ANOVA test was performed regarding to the contours.

The average temperature, the standard deviation and the coefficient of variation for the corresponding contours are presented in Table 1, wherein CV is the coefficient of variation, and SD is the standard deviation of the mean: $CV(\%)=\frac{SD}{mean}\times 100\%$.

Table 1

| Contour | Mean±SD (°C) | CV(%) |
|---------|--------------|-------|
| A | 3.6±1.0 | 26.8 |
| B | 4.2±0.3 | 6.9 |
| C | 4.3±0.2 | 3.5 |
| D | 4.4±0.1 | 2.6 |

The results summarised in table 2 were obtained using One-way ANOVA test with Tukey-Kramer multiple comparisons test. This test is designed for the simultaneous comparison of means of several groups (columns). Tukey-Kramer Multiple Comparisons Test compares all pairs of columns to find which pairs are significantly different from which.

Table 2

| Comparison | Mean difference | P-value | |
|------------|-----------------|---------|--------|
| A versus B | -0.61 | ** | P<0.01 |
| A versus C | -0.77 | *** | P<0.001 |
| A versus D | -0.80 | ** | P<0.01 |
| B versus C | -0.15 | ns | P>0.05 |
| B versus D | -0.19 | ns | P>0.05 |
| C versus D | -0.03 | ns | P>0.05 |

ns - difference between means is not significant, because P>0.05, , * - difference between means is significant, because P<0.05, ** - difference between means is significant, because P<0.01, ***- difference between means is significant, because P<0.001

In conclusion the temperature differences between the wells inside *contour-B* are statistically indistinguishable, so the temperature inside *contour-B* is homogeneous. The temperature in the wells of the first rows around the perimeter of the device is significantly different from the rest of the wells, because the contact surface of these wells with the heat-carrying fluid is bigger then for the rest of the wells in the device. These limitations can be overcome by different ways such as the redesign of the internal structure of the initial microtiter plate, a correct isolation of the device can also be provided such as to avoid heat dissipation, the use of different dimensioned plates so that the free volume and the flow of the heat-carrying fluid is such that a homogeneous and constant temperature is obtained throughout all wells. Since the temperature in the wells enclosed in *contour-B* was shown to be homogeneous throughout all wells a device could be manufactured, comprising an upper plate having less and/or smaller wells with all of them positioned in the centre said upper plate. With such configured device the temperature would be homogeneous throughout the wells.

Example 4: Study of enzyme kinetic properties

The kinetic parameters ($V_{max}$, $K_M$ and $K_{si}$) of an enzyme the lactate dehydrogenase (LDH) (mixture of isozymes LDH-A and LDH-B) from Atlantic cod *Gadus morhua* muscles were measured in crude homogenate using the device according to the invention. The acclimation of the fish was of 12 months at +4°C. The fish were killed after the acclimation and the kinetic parameters of the isolated enzyme were determined. The dependence of the initial rate of the enzymatic reaction on substrate concentration was measured at 340 nm, at a temperature of +4°C. The duration of initial rates acquisition in kinetic mode was 3 minutes and 30 enzymatic reactions, at 10 substrate concentrations in 3 repetitions, were performed in order to calculate the kinetic constants.

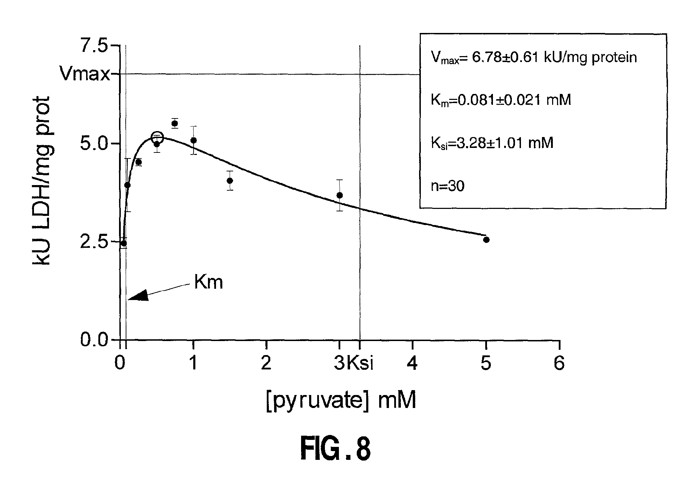

The data obtained are illustrated figure 8. The graph plotted represents the dependence of the initial rate of the reaction expressed in kU LDH/mg protein upon substrate concentration i.e. pyruvate concentration for the enzyme studied. From non-linear regression analysis $V_{max}$, $K_M$ and $K_{si}$ are calculated. $V_{max}$= 6.78 kU LDH/mg protein, $K_M$ = 0.081 mM and $K_{si}$ = 3.28 mM. The substrate concentration at which the rate of the reaction reached a maximum is $[S]_m$ = 0.51 mM. Consequently, the rate of the reaction at $[S]_m$ $(\upsilon_m)$ is 5.15 kU LDH/mg protein at +4°C.

In conclusion it was proved that using the device according to the invention a sufficient amount of data were collected during 3 minutes of data acquisition for the calculation of a full set of kinetic parameters of an enzyme at environmentally relevant temperature (+4°C).

Example 5: Calculation of apparent Arrhenius $E_a$ activation energy of an enzyme.

The apparent Arrhenius $E_a$ activation energy of the lactate dehydrogenase LDH (mixture of isozymes LDH-A and LDH-B in crude homogenate) from Atlantic cod *Gadus morhua* muscles was calculated using the device according to the invention. The acclimation of the fish was of 12 months at +4°C. The enzyme kinetic parameters were measured at 340 nm, at temperatures from + 4 °C to + 30 °C. The duration of initial rates acquisition in kinetic mode was 3 minutes and 210 enzymatic reactions were performed, at 10 substrate concentrations in 3 repetitions at 7 assay temperatures, in order to calculate the kinetic constants at different temperatures.

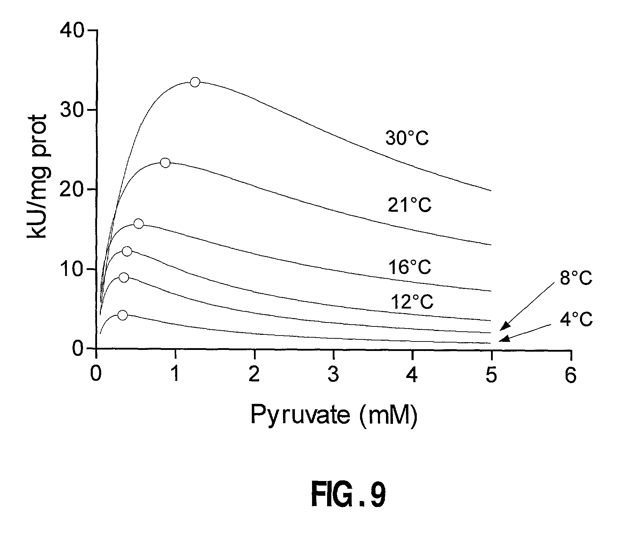

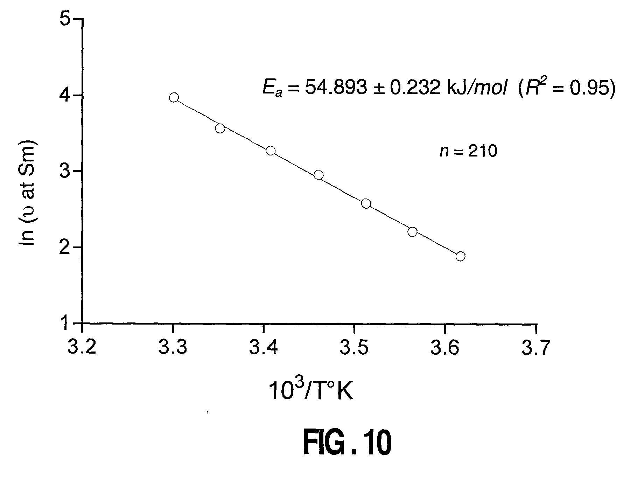

The data were collected in the same way as described above, the assays were performed at different temperatures: 4, 8, 12, 16, 21, 25, and 30°C. The results are shown in figure 9 and figure 10.

Figure 9 shows a graph representing the dependence of the initial rates of the reaction upon substrate concentration at different temperatures for the enzyme studied; The rate of the reaction at $[S]_m$ $(\upsilon_m)$ was used for conversion into an Arrhenius plot as shown in figure 10, and then the apparent activation energy $E_a$ = 54.893 kJ/mol was computed from the slope of the line.

In conclusion using the device according to the invention a sufficient amount of data from one specimen was collected during 21 minutes in total for the calculation of the apparent Arrhenius activation energy. Taking into account the loading and washing of the device, the temperature balance in the device after changing it, and the simultaneous measure from several specimens, it is possible to measure $E_a$ from several specimens within a day using said device. This is surprisingly fast compared to the existing techniques.

## Claims

1. A device (1) suitable for at least temporarily housing a plurality of liquid, solid and/or semi-solid substrates (2), comprising:

   - an upper plate (3) consisting of a plurality of downwardly directed wells (4),
   - a bottom plate (5), and
   - an at least partly hollow chamber (6), positioned between the upper and the bottom plates,

   whereby said chamber is able to contain a heat-carrying element (7) for controlling the temperature of the substrates.

2. A device according to claim 1, wherein the upper plate is a micro-titer plate (8) preferably made from a rigid and a light transparent material.

3. A device according to claims 1 or 2, comprising further side walls (9) interconnecting said upper plate (3) with said bottom plate (5).

4. A device according to any of claims 1 to 3, wherein said chamber is liquid tight.

5. A device according to any of claims 1 to 4, wherein the heat-carrying element (7) is a heat-carrying fluid (10).

6. A device according to claim 5, further comprising temperature control means comprising: a heating unit, connection tubes (13) and pumping means for the transport of the heat-carrying element (7) in and out of the chamber and a heat regulator for controlling the temperature of the heat-carrying fluid (10).

7. A device according to any of claims 5 or 6, wherein the chamber is provided with an inlet (11) and an outlet (12) for allowing circulation of the heat-carrying fluid (10) in and out of the chamber (6).

8. A device according to any of claims 5, 6 or 7 wherein the connection tubes (13) are flexible and have a variable working length.

9. A device according to any of claims 1 to 8, wherein the upper and the bottom plates and the heat-carrying element (7) are of material suitable for spectroscopic applications.

10. A device according to any of claims 1 to 9, wherein the upper plate (3) is releasable mounted from the bottom plate (5).

11. A method for performing simultaneously a plurality of spectroscopic analysis, wherein as from the dispersing of a plurality of substrates on a support, the reaction and the analysis are performed at equal temperatures.

12. A method according to claim 11 wherein the dispensing is performed on a support, wherein the support is part of the device of any of claims 1 to 10.

**8**

**4**

**I**

**1**

**5**

**11**

**12**

**9**

**FIG . 1**

**2**

**4**

**8**

**9**

**6**

**7**

**5**

**FIG . 2**

FIG.3

**FIG . 4**

FIG.5

room T°C

T°C in plate

T°C in water bath

· Thermostatic bath
○ Device

y=6.80 + 0.694x

FIG.6

FIG.7

FIG.8

FIG.9

**FIG . 10**

**European Patent Office**

## EUROPEAN SEARCH REPORT

Application Number

EP 01 87 0130

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 498 780 A (BANNO TAIICHI ET AL) 12 February 1985 (1985-02-12) * column 3, line 13 - column 4, line 20; figures * | 1-12 | B01L3/00 B01L7/00 B01L9/06 G01N21/03 |
| X | US 4 824 791 A (EKHOLM PERTTI ET AL) 25 April 1989 (1989-04-25) * column 1, line 4-8 * * column 2, line 30-47; figures * | 1-12 | |
| X | GB 2 177 200 A (ZEISS JENA VEB CARL) 14 January 1987 (1987-01-14) * page 2, line 38-128; figure 3 * | 1-12 | |
| X | US 3 940 249 A (MCCLURG JAMES E) 24 February 1976 (1976-02-24) * column 1, line 59 - column 2, line 13; figures 1-3 * | 1,3-5 | |
| X | DE 20 38 814 A (HOFFMANN J) 17 February 1972 (1972-02-17) * page 2, line 24-35; claim 1; figure * | 1,3-7 | TECHNICAL FIELDS SEARCHED (Int.Cl.7) B01L G01N |

The present search report has been drawn up for all claims

| Place of search | Date of completion of the search | Examiner |
|---|---|---|
| MUNICH | 23 November 2001 | Persichini, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 87 0130

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2001

| Patent document cited in search report | | Publication date | Patent family member(s) | | Publication date |
|---|---|---|---|---|---|
| US 4498780 | A | 12-02-1985 | JP | 1015012 B | 15-03-1989 |
| | | | JP | 1532513 C | 24-11-1989 |
| | | | JP | 57132038 A | 16-08-1982 |
| | | | DE | 3204578 A1 | 07-10-1982 |
| US 4824791 | A | 25-04-1989 | AT | 47910 T | 15-11-1989 |
| | | | DE | 3666872 D1 | 14-12-1989 |
| | | | EP | 0222905 A1 | 27-05-1987 |
| | | | WO | 8700281 A1 | 15-01-1987 |
| | | | JP | 63500268 T | 28-01-1988 |
| GB 2177200 | A | 14-01-1987 | DD | 239473 A1 | 24-09-1986 |
| | | | DE | 3619107 A1 | 08-01-1987 |
| | | | FI | 862539 A | 02-01-1987 |
| | | | HU | 42703 A2 | 28-08-1987 |
| | | | YU | 108486 A1 | 30-04-1988 |
| US 3940249 | A | 24-02-1976 | NONE | | |
| DE 2038814 | A | 17-02-1972 | DE | 2038814 A1 | 17-02-1972 |

EPO FORM P0459

For more details about this annex : see Official Journal of the European Patent Office, No. 12/82